# EUROPEAN PATENT APPLICATION

(11) **EP 2 302 237 A2**
(43) Date of publication of application: **30.03.2011**
(21) Application number: 10180578.6
(22) Date of filing: 28.09.2010
(51) Int. Cl.: F16C 1/26

(54) **Double-heading cable system to be applied in an automotive vehicle climatization unit and control device for an automotive vehicle climatization unit**

(30) Priority: 29.09.2009 BR 09033122
(71) Applicant: Valeo Sistemas Automotivos LTDA, 05693-00 Sao Paulo (BR)
(72) Inventor: Matias, Tiago, 12913-022 BRAGANCA PAULISTA (BR); Gerez, José Antonio, 13230-411 PAULISTA (BR); Texeira, Mathias, 13280-000 SAO PAULO (BR)
(74) Representative: Metz, Gaëlle

(57) **Abstract**

The invention is related to a double-heading cable system to be applied in an automotive vehicle climatisation unit. The double-heading cable system includes a double cable comprising two parts, namely, a housing or fixed part made up of an external tube (22) and an internal tube (23) and the cables themselves (20) are moveable part, coated by a coating material.

## Description

The present invention relates to a double-heading cable to be applied in an automotive vehicle double-heading climatization unit, to transfer mechanical movement from the control panel to the climatization unit. The cable in the present invention can be applied for a mixing function, a modal function and/or a recirculation function.

Thus, the present invention involves simplifying the function and the kinematics of a double-heading cable in order to make it competitive in the field of GSV and other double-heading cable applications.

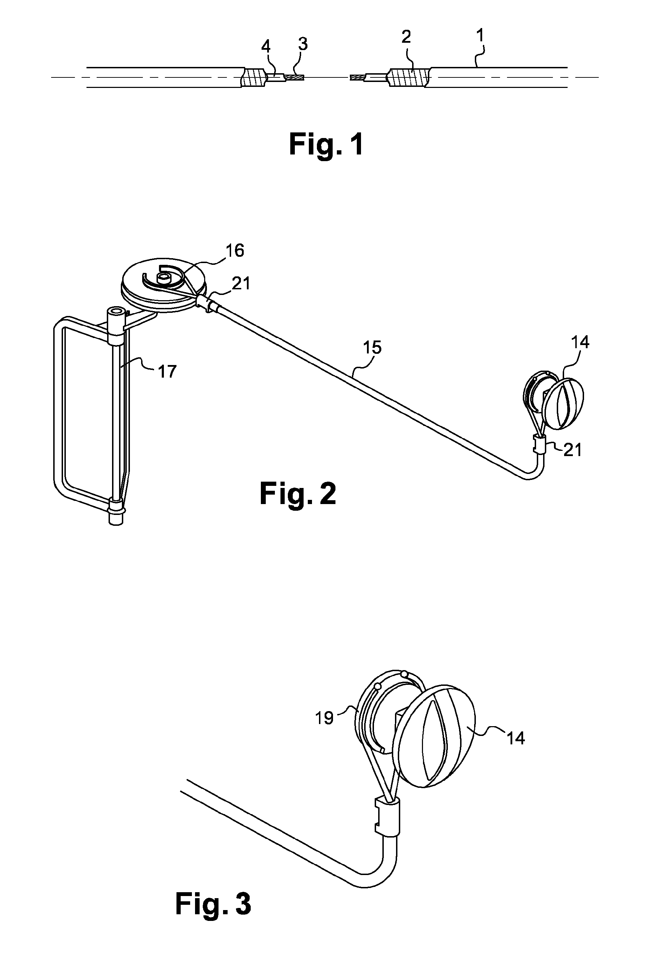

As can be seen in figure 1, a conventional Bowden cable comprises two parts, i.e. housing (fixed part) comprising an external tube 1' with an internal tube (flat metal spiral) 2' and the cable (moveable part) made up of compact (steel) wire 3' coated with a layer of polyamide (PA) or polyoxymethylene (POM). The housing 1', 2' is fixed and the cable moves inside them, and the function of the coating 4' is therefore to prevent the cable/housing wearing away owing to the friction caused by the cable rubbing against the housing. There are two options for protecting the PA coating: the first is in accordance with this example, where the cable is coated with POM/PA material 4' so that it slides inside the fixed part, the housing, comprising two layers, the external one 1' and the internal one 2'; and the second option is for the bare cable 3' to slide inside the housing comprising three layers, the external one 1', the internal one 2' and the protective one 4'.

In patent EP0653028 B1, a traditional heating cable controls the operation like an articulation between the control panel and the exhaust door. In such a device, the cable must be capable of supporting compression and snatch loads because this cable is being both pulled and compressed in order to operate the exhaust door. The compression loads require the cable to be somewhat rigid, which in turn limits the radius of the curvatures through which the cable can bend during installation procedures as well as in the final positioning of the cable. Another disadvantage of these traditional temperature control devices is that their cable lengths often need to be adjusted after being installed in the vehicle. In patent EP0653028 1, each cable (reference numbers 82 and 84) is in conformity with the conventional cable described in figure 1 and both cables are covered with the sheath (reference 39) only to prevent the cables from separating rather than for protection.

The present invention proposes to substitute these two cables with just one. The function of preventing the cable from separating will also be included. The invention thus proposes to simplify the function in order to come close to the target of cost to function.

Patent US 4041797 describes that in a device of the type which includes a wire to operate the collar fixed to a rotating component operationally connected with the strangulation valve, the wire is covered with a flexible sliding tubular guide. One portion of this guide is axially extendable and it is equipped with spring elements to exert stress on the guide portion towards extension. The flexible wire guide remains fixed at opposite ends, and is flexed between these two points, and contracts axially against the spring's stress when the traction of the wire exceeds a preset level, so that a stop element envisaged to limit the extension of the strangulation valve closure movement does not become deformed as a result of excessive traction of the wire. This enables the strangulation valve to assume an exact empty position, and to assure the engine's required empty running.

This patent presents two cable coverings (references 19 and 22), one for each cable subject to traction. The number of components for the system is approximately the same as in EP0653028 B1 and therefore still fails to reach the target of cost to function.

The system involved in the present invention will simplify the function and will reduce the cost, thereby making the system more competitive.

The present invention consists of transitioning a button-push movement along the cable to the kinematic mechanism which moves a shutter. It is fixed to the housing and the control panel via a quick-release connector.

The invention thus relates to a double-heading cable system to be applied in an automotive vehicle climatization unit, which includes a double cable comprising two parts, namely a housing or fixed part made up of an external tube and an internal tube and the cables themselves or moveable part covered with a coating material.

The invention also relates to a control device belonging to an automotive vehicle climatization unit including the aforementioned double-heading cable system which consists of transitioning a button-push movement along a double cable inside housing to a kinematic mechanism which moves a shutter in the climatization unit. The set is fixed to the housing and the control panel via a quick-release connector.

The present invention will be described in more detail based on the drawings annexed, where:
Figure 1 represents a conventional Bowden cable system.
Figure 2 represents a diagrammatical view of the system in accordance with the invention.
Figure 3 represents an amplified view showing the first button connection option.
Figure 4 represents an amplified view showing the second button connection option.
Figures 5a-5d show diagrammatical views of the cable being used in the system in accordance with the invention.
Figure 6 represents a first option of placing the double cable inside just one cable covering.
Figure 7 represents a second option of placing the double cable inside just one cable covering.
Figure 8 represents a third option of placing the double cable inside just one cable covering.
Figure 9 represents a diagrammatical view of a first option of installing the system's unitary kinematic connection in accordance with the invention.
Figure 10 represents a diagrammatical view of a second option of installing the system's unitary kinematic connection in accordance with the invention.
Figure 11 represents another view of the second option of installing the system's unitary kinematic connection in accordance with the invention.
Figures 12 and 13 diagrammatically represent the system's quick-release connector in accordance with the invention.
Figure 14 shows an alternative diagram of the Bowden cable system using the invention.
Figure 2 shows a diagram of the double-heading cable system to be applied in an automotive vehicle climatization unit, which consists of transitioning a button-push 14 movement along a double cable inside housing 15 to a kinematic mechanism 16 which moves a shutter 17 in the climatization unit. The set is fixed to the housing and the control panel via a quick-release connector 21.

There are two options for connecting the button.

In the first option (figure 3), button 14 may be connected directly to a pulley 19 where the cable from pulley 20 are connected. This system is very simple if compared with the button connection set out in EP0653028 B1. This system is usually implemented when the applicant is also responsible for developing the control panel or when it can suggest to the client that the interface be assured using a double-heading cable.

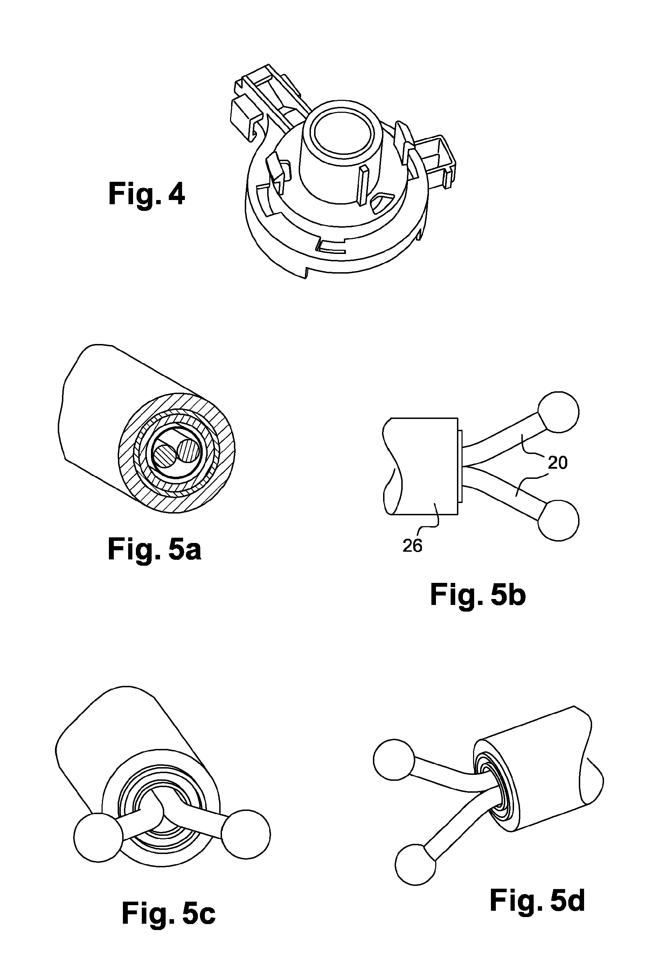

In the second option, the button may be connected directly to the connector shown in figure 4. This alternative is somewhat similar to the housing connection set out in EP0653028 B1, but there the pulleys to connect the cables are housed. This alternative is used if the client already stipulates the connection, but it has a cost disadvantage compared with the first option, where the housing is eliminated.

Figures 5a-5d show that the housings for two cables set out in patents EP0653028 B1 and US 4041797 are substituted by just one, 15, and both cables 20 will operate within it.

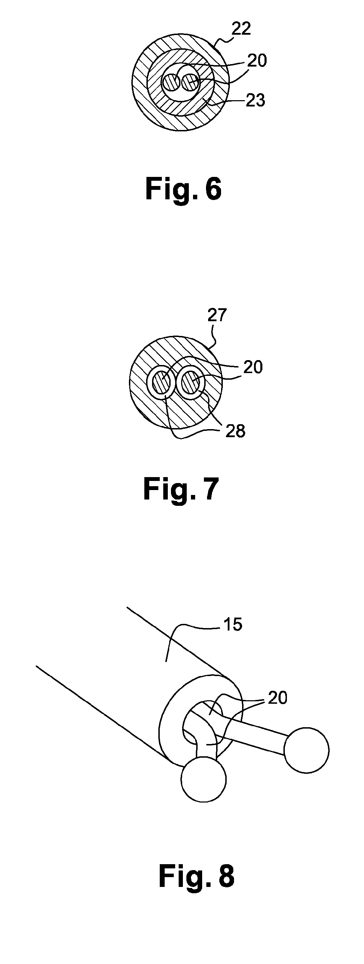

Figures 6 to 8 show three options for the installation of the double cable within a cable housing.

In the first option (figure 6), the double cable comprises two parts, namely a housing or fixed part comprising an external tube (PE or PP) 22 and an internal tube (POM) 23 and the cables themselves 20 (moveable part) made of steel and coating with a POM or PA type material.

The housing will be fixed and the cables will move within it in order to transfer the movement from one end of the cables to the other. The function of the internal tube 23 in a layer is to insulate the housing 15 from cables 20 in order to prevent wearing away owing to the two cables rubbing inside the housing. The compact double cable is coated with a POM or PA type material in order to prevent direct cable-to-cable contact when in operation, since it could overheat and wear away the housing and affect the cable movement function.

In the second option (figure 7) the double cable also comprises two parts, namely: housing (fixed part) made up of an external tube 27 with two internal tubes 28 to conduct each cable, and the cables themselves (moveable part) are made up of a bare compact double cable 20.

The housing will be fixed and the cables will move within it in order to transfer the movement from one end of the cables to the other. The function of the internal tube 28 in a layer made of POM material is to insulate the external tube 27 from the cable housing 20 in order to prevent wearing away owing to the cables rubbing inside it.

The difference between options 1 and 2 is that the compact cable does not need to be coated with a layer of POM; the cables are bare because each cable will operate within an internal housing tube made of POM 28. It will thus insulate the cables and prevent the cables from overheating owing to friction when in operation.

In the case of options 1 and 2, a sheet of steel may be included if necessary between the internal tube made of POM and the external tube made of PP or PE, so as not to brake the steel cable by deformation in the POM layer as per the internal tube (flat metal spiral) belonging to the conventional Bowden cable (figure 1).

In the third option (figure 8) the compact wire cables are substituted by a polyamide cable (similar to a fishing line). In this case, the housing 15 is very simple as it is made up of a single tube or layer of PP or PE and the two PA cables 20 operate within it. A sheet of steel may be included if necessary inside the housing 15, so as not to brake the PA cable in the event of the housing 15 becoming deformed.

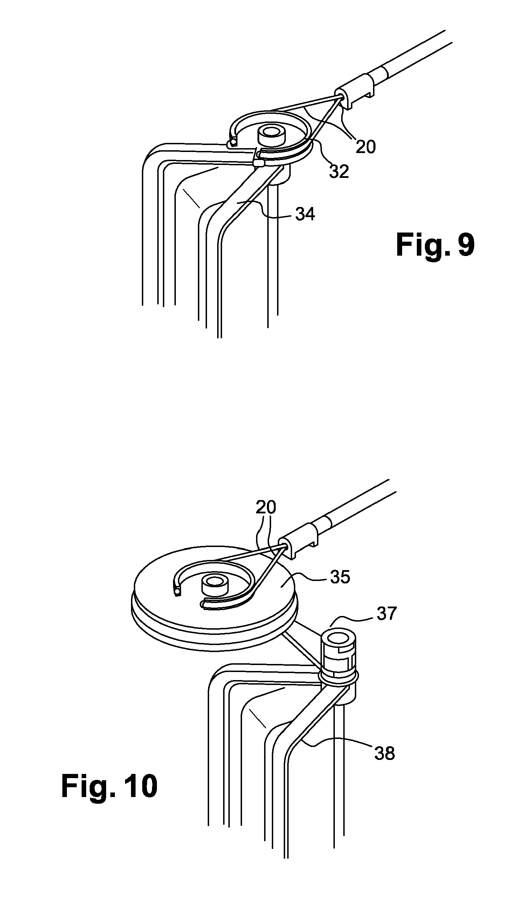

Figure 9 shows option one for the unitary kinematic connection. There is an axle on pulley 32 which is connected directly to shutter 34 so that, if we compare it to patent EP0653028 B1, some levers and kinematic components are eliminated. The cables 20 are connected directly to the pulley 32 so that the housing 1 represented in figure 1 is also eliminated. This option may be implemented when there is only one shutter per double-heading cable.

In addition, a gear or camshaft may be added on one side of the pulley creating an extension and it may move other kinematic components. This option is dependent upon a distribution mode logic.

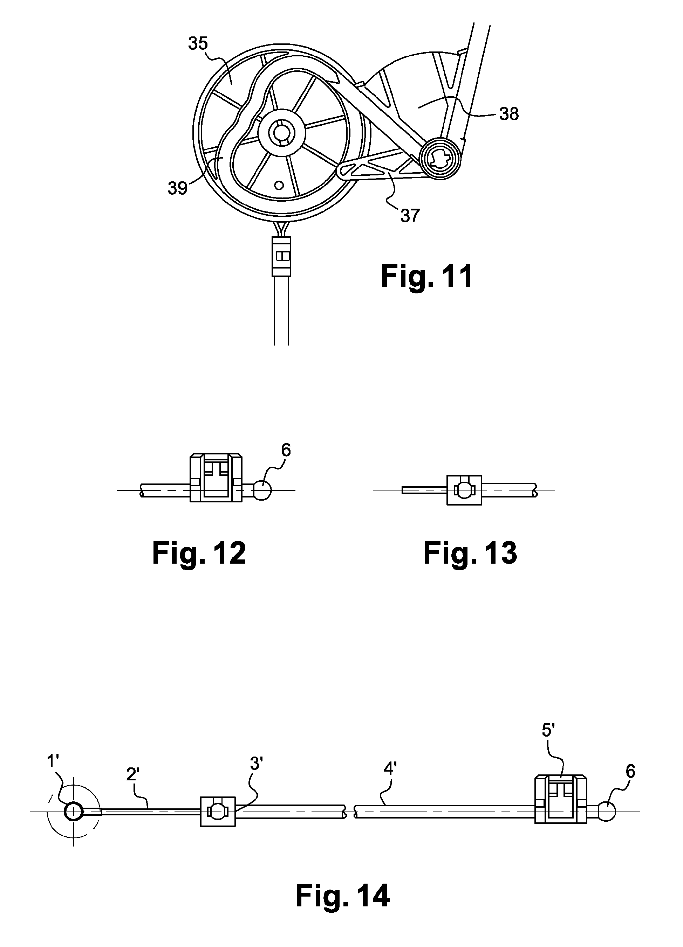

Figures 10 and 11 show option two for the unitary kinematic connection. The pulley is integrated into a central camshaft or gear 35. There are some tracks 39 in the camshaft 35 which depend upon the kinematics, i.e., articulation of one or more levers 37 or another kinematic component which transfers the movement to one or more shutters 38. If we compare it to patent EP0653028 B1, the housing 1 in figure 1 is eliminated. This option may be used when the double-heading cable moves multiple shutters.

Figures 12 and 13 illustrate a standard quick-release connector which will not be additionally detailed here.

Figure 14 represents a version of the application of the invention to a conventional Bowden cable system, i.e. a Bowden cable comprising two cables within just one cable housing to operate two levers. The cable must be fixed on the control panel close two the two operating levers on the unitary levers in order to apply this solution.

## Claims

1. Double-heading cable system to be applied in an automotive vehicle climatization unit, **characterised by** the fact that it includes a double cable comprising two parts, namely, a housing or fixed part made up of an external tube (22) and an internal tube (23) and the cables themselves (20) or moveable part, coated by a coating material.

2. Double-heading cable system in accordance with claim 1, **characterised by** the fact that the external pipe (22) is made of polyethylene or polypropylene and the internal tube (23) is made of polyoxymethylene and the cables themselves (20) are made of steel covered in a polyoxymethylene or polyamide type material.

3. Double-heading cable system in accordance with claim 1, **characterised by** the fact that the double cable also comprises two parts, namely: a housing comprising an external tube (27) with two internal tubes (28) to conduct each cable, and the cables themselves comprise a bare compact double cable (20).

4. Double-heading cable system in accordance with claim 3, **characterised by** the fact that the internal tube (28) is made of polyoxymethylene.

5. Double-heading cable system in accordance with one of the claims 1 to 3, **characterised by** the fact that a steel sheet is included between the polyoxymethylene internal tube (23, 28) and the external tube (22, 27) made of polypropylene or polyethylene.

6. Double-heading cable system in accordance with claim 1, **characterised by** the fact that the compact cables (20) are made of polyamide and the housing (15) comprises a single tube made of polypropylene or polyethylene and the two polyamide cables (20) operate within it.

7. Double-heading cable system in accordance with claim 6, **characterised by** the fact that a steel sheet is included within the housing (15).

8. Control device for an automotive vehicle climatization unit including the double-heading cable system in accordance with claims 1 to 7, **characterised by** the fact that it consists of transitioning a button-push (14) movement along a double cable (20) within a housing (15) to a kinematic mechanism (16) which moves a shutter (17, 34, 38) belonging to the climatization unit. It is fixed to the housing (15) and the control panel via a quick-release connector (21).

9. Control device in accordance with claim 8, **characterised by** the fact that the button (14) is connected directly to a pulley (19) where pulley cables (20) are connected.

10. Control device in accordance with claim 8, **characterised by** the fact that the button (14) is connected directly to a connector.

11. Control device in accordance with claim 8, **characterised by** the fact that the unitary kinematic connection mechanism entails an axle on the pulley (32) which is connected directly on the shutter (34) belonging to the climatization unit and the cables (20) are connected directly on the pulley (32).

12. Control device in accordance with claim 11, **characterised by** the fact that a gear or camshaft may be added on one side of the pulley creating an extension and it may move other kinematic components.

13. Control device in accordance with claim 8, **characterised by** the fact that for the unitary kinematic connection a pulley is incorporated into a central gear or camshaft (35) and there are some tracks (39) on the camshaft (35) which are dependent upon the kinematics, i.e. articulation of one or more levers (37) or another kinematic component which transfers the movement to one or more shutters (38) belonging to the climatization unit.
